(19) Europäisches Patentamt
European Patent Office
Office européen des brevets

(11) Publication number: **0 596 534 A2**

(12) **EUROPEAN PATENT APPLICATION**

(21) Application number: **93118070.7**

(22) Date of filing: **05.11.93**

(51) Int. Cl.5: **C08L 83/07**, //(C08L83/07, 83:05,83:07)

(30) Priority: **05.11.92 JP 321225/92**

(43) Date of publication of application: **11.05.94 Bulletin 94/19**

(84) Designated Contracting States: **DE FR GB IT**

(71) Applicant: **Dow Corning Toray Silicone Co., Ltd.**
**3-16, Nihombashi-muromachi 2-chome**
**Chuo-ku, Tokyo(JP)**

(72) Inventor: **Kasuya, Akira c/o Dow Corning Toray Sil.Comp.Ltd.**
**2-2, Chigusa Kaigan,**
**Ichihara-shi**
**Ciba Prefecture(JP)**
Inventor: **Mine, Katsutoshi c/o Dow Corning Toray Sil.Com.Ltd**
**2-2, Chigusa Kaigan,**
**Ichihara-shi**
**Ciba Prefecture(JP)**
Inventor: **Yamakawa, Kimio c/o Dow Corning Toray Sil.Com.Ltd**
**2-2, Chigusa Kaigan,**
**Ichihara-shi**
**Ciba Prefecture(JP)**

(74) Representative: **Sternagel, Hans-Günther, Dr.**
**Patentanwälte Dr. Michael Hann, Dr. H.-G. Sternagel, Dr. H. Dörries,**
**Sander Aue 30**
**D-51465 Bergisch Gladbach (DE)**

(54) **Curable organopolysiloxane composition with initial and durable adherence.**

(57) A curable organopolysiloxane composition which exhibits adhesion to various substrates both initially and after exposure to high temperatures and high humidity over extended periods of time is obtained by mixing a polyorganosiloxane having at least two alkenyl groups, an organopolysiloxane having at least two silicon-bonded hydrogen atoms, an organosilicon compound having 1 to 20 mole% organosilsesquioxane units, 20 to 80 mole% diorganosiloxane units and 20 to 80 mole% triorganosiloxy units in which there is at least one epoxy group per molecule, at least 2 mole percent of the organic groups are alkenyl, and at least 5 mole percent of the organic groups are silicon-bonded alkoxy groups, an organotitanium compound, and a hydrosilylation-reaction catalyst.

EP 0 596 534 A2

The present invention relates to a curable organopolysiloxane composition that forms a cured product which exhibits an excellent initial adherence immediately after curing and which also exhibits an adherence that is very durable to high temperatures and high humidities.

Curable organopolysiloxane compositions that cure in the presence of a hydrosilylation-reaction catalyst are employed in a broad range of fields because they cure rapidly at room temperature or upon heating. However, these compositions generally exhibit a poor self-bondability. As a result, when such compositions are used in adhesive applications, it is necessary to add various types of adhesion promoters. These include organosilicon compounds that contain epoxy-containing organic + silicon-bonded alkoxy + alkenyl groups in Japanese Patent Publication [Kokai] 01-85224 [85,224/1989], and organosilicon compounds that contain alkenyl + alkoxyalkyl + silicon bonded alkoxy groups in Japanese Patent Publication [Kokai] 04-11634 [11,634/1992]. In addition, Japanese Patent Publication [Kokai] 04-178461 [178,461/1992], has proposed a curable organopolysiloxane composition with an improved self-bondability. This composition is composed of alkenyl-containing organopolysiloxane; SiH-containing organopolysiloxane; (alkenyl + alkoxyalkyl + SiH-bonded alkoxy) -containing organosilicon compound; organometallic compound selected from organotitanium compounds, organozirconium compounds, and organoaluminum compounds; and hydrosilylation-reaction catalyst.

With regard to the adhesion promoter proposed in Japanese Patent Publication [Kokai] 01-85224, curable organopolysiloxane compositions with this adhesion promoter have an excellent initial adherence immediately after curing. However, when the cured product is maintained in a high temperature/high humidity environment, the durability of its adherence gradually declines. In the case of Japanese Patent Publication [Kokai] 04-11634, these compositions exhibit an unsatisfactory initial adherence immediately after curing and the cured products suffer from a substantial decline in durability of adhesion when maintained in high temperature/high humidity conditions. Finally, the composition proposed in Japanese Patent Publication [Kokai] 04-178461 suffers from an unsatisfactory initial adherence immediately after curing. Its cured product also exhibits an unsatisfactory durability of adhesion when maintained in a high temperature/high humidity condition. As a result, when the prior art compositions are used, as protective coatings for semiconductor elements, none yield a cured product that performs satisfactorily in terms of both immediate post-cure initial adherence to the semiconductor element and durability of adhesion in high temperature/high humidity conditions (121 °C/100% RH). Delamination occurs at the interface between the cured material and the semiconductor element and the semiconductor element suffers from a substantial decline in reliability.

As the result of extensive investigations directed at solving the problems described hereinbefore, the instant invention introduces a curable organopolysiloxane composition that forms a cured product with both an excellent initial adherence immediately after curing and an adherence that is very durable to the challenges of high temperature/high humidity environment.

The present invention is a curable organopolysiloxane composition comprising

(A) 100 weight parts of a polyorganosiloxane that contains in each molecule at least 2 siloxane units with the following general formula

$$R^1_aR^2_bSiO_{[4-(a+b)]/2}$$

$R^1$ represents an alkenyl group, $R^2$ represents a substituted or unsubstituted monovalent hydrocarbon group excluding alkenyl groups, $\underline{a}$ is 1 or 2, $\underline{b}$ is an integer with a value of zero to 2, and $\underline{a} + \underline{b}$ is an integer with a value of 1 to 3,

(B) polyorganohydrogensiloxane that contains in each molecule at least 2 siloxane units with the following general formula

$$R^3_cH_dSiO_{[4-(c+d)]/2}$$

$R^3$ represents a substituted or unsubstituted monovalent hydrocarbon group excluding alkenyl groups, $\underline{c}$ is an integer with a value of zero to 2, $\underline{d}$ is an integer with a value of 1 to 3, and $\underline{c} + \underline{d}$ is an integer with a value of 1 to 3, in a quantity that provides 0.5 to 5.0 moles silicon-bonded hydrogen atoms in component (B) per 1 mole alkenyl groups in component (A),

(C) 0.1 to 20 weight parts of an organosilicon compound comprising

1 to 20 mole% siloxane unit with the general formula

$$R^4_eR^5_{(1-e)}SiO_{3/2}$$

20 to 80 mole% siloxane unit with the general formula

$R^4{}_fR^5{}_gR^6{}_hSiO_{2/2}$

and

20 to 80 mole% siloxane unit with the general formula

$R^4{}_iR^5{}_jR^6{}_kSiO_{1/2}$

$R^4$ represents an alkenyl group; $R^6$ is a group selected from alkyl groups, alkoxyalkyl groups, and epoxy-containing organic groups with the proviso that at least one of the preceding siloxane units in a molecule contains an epoxy-containing organic group as $R^5$; $R^6$ represents an alkoxy group having 1 to 4 carbon atoms; e is zero or 1; f is zero or 1; g is an integer with a value of zero to 2; h is zero or 1; f + g + h is 2; i is zero or 1; j is an integer with a value of zero to 3; k is an integer with a value of zero to 2; i + j + k is 3;
with the provisos that $R^4$ comprises at least 2 mole% of the total silicon-bonded organic groups in component (C) and $R^6$ comprises at least 5 mole% of the total silicon-bonded organic groups in component (C),
(D) 0.01 to 2 weight parts organotitanium compound, and
(E) hydrosilylation-reaction catalyst in the amount of 0.1 to 500 parts of metal atom per one million parts of component (A).

Component (A) is the main or base component of the invention and comprises a polyorganosiloxane that contains at least 2 units with the general formula

$R^1{}_aR^2{}_bSiO_{[4-(a+b)]/2}$

in each molecule. $R^1$ represents an alkenyl group, and is vinyl, allyl, butenyl, pentenyl, hexenyl, and heptenyl. $R^1$ is preferably vinyl. $R^2$ represents substituted and unsubstituted monovalent hydrocarbon groups excluding alkenyl groups. The monovalent hydrocarbon groups of $R^2$ alkyl groups such as methyl, ethyl, isopropyl, n-propyl, tert-butyl, n-butyl, pentyl, heptyl, and octyl; aryl groups such as phenyl, tolyl, and xylyl; and substituted alkyl groups such as chloromethyl, and 3,3,3-trifluoropropyl. $R^2$ is preferably methyl or phenyl. With regard to the subscripts in the preceding formula, a is 1 or 2, b is an integer with a value of zero to 2, and a + b is an integer with a value of 1 to 3.

The viscosity of component (A) is not specifically restricted, but preferably falls in the range of 0.010 to 1,000 Pa.s because such viscosities make possible facile handling of the resulting curable organopolysiloxane composition and provide good physical properties on the part of the cured product afforded by the cure of said composition.

The polyarganosiloxane of component (A) is preferably a polydiorganosiloxane such as dimethylvinylsiloxy-terminated polydimethylsiloxanes, dimethylvinylsiloxy-terminated (dimethylsiloxane-methylphenylsiloxane) copolymers, dimethylvinylsiloxy-terminated polymethylphenylsiloxanes, dimethylvinylsiloxy-terminated polydiphenylsiloxanes, dimethylvinylsiloxy-terminated (dimethylsiloxane-methylvinylsiloxane) copolymers, dimethylvinylsiloxy-terminated (methylvinylsiloxane-methylphenylsiloxane) copolymers, trimethylsiloxy-terminated ( dimethylsiloxane-methylvinylsiloxane) copolymers, trimethylsiloxy-terminated polymethylvinylsiloxanes, hydroxyl-terminated polymethylvinylsiloxanes, hydroxyl-terminated (dimethylsiloxane-methylvinylsiloxane) copolymers, and branched polydimethylsiloxane that contains at least 3 dimethylvinylsiloxy groups in each molecule.

Component (B) functions as a crosslinker for the composition of the present invention, and consists of organopolysiloxane that has at least 2 units with the following general formula

$R^3{}_cH_dSiO_{[4-(c+d)]/2}$

in each molecule. $R^3$ in the preceding formula represents substituted and unsubstituted monovalent hydrocarbon groups excluding alkenyl groups. The monovalent hydrocarbon groups of $R^3$ are specifically exemplified by alkyl groups such as methyl, ethyl, isopropyl, n-propyl, tert-butyl, n-butyl, pentyl, hexyl, heptyl, and octyl; aryl groups such as phenyl, tolyl , and xylyl; and substituted alkyl groups such as chloromethyl, and 3,3,3-trifluoropropyl. In addition, c is an integer with a value of zero to 2, d is an integer with a value of 1 to 3, and c + d is an integer with a value of 1 to 3.

The viscosity of component (B) is not specifically restricted, but preferably falls in the range of 0.001 to 1,000 Pa.s because such viscosities make possible facile handling of the resulting curable organopolysiloxane composition and provide good physical properties on the part of the cured product afforded by the cure of said composition.

The subject organopolysiloxane of component (B) is specifically exemplified by dimethylhydrogensiloxy-terminated polydimethylsiloxanes, dimethythydrogensiloxy-terminated (dimethylsiloxane-methylhydrogensiloxane) copolymers, dimethylhydrogensiloxy-terminated (dimethylsiloxane-methylphenylsiloxane) copolymers, dimethylhydrogensiloxy-terminated polymethylphenylsiloxanes, trimethylsiloxy-terminated polymethylhydrogensiloxanes, trimethylsiloxy-terminated (dimethylsiloxane-methylhydrogensiloxane) copolymers, trimethylsiloxy-terminated (methylphenylsiloxane-methylhydrogensiloxane) copolymers, and branched polydimethylsiloxane that contains at least 3 dimethylhydrogensiloxy groups in each molecule.

Component (B) is to be added to the curable organopolysiloxane composition of the present invention in a quantity that provides 0.5 to 5.0 moles of silicon-bonded hydrogen atoms in component (B) per 1 mole of alkenyl groups in component (A). The bases for this range are as follows; at less than 0.5 moles silicon-bonded hydrogen in component (B) per 1 mole alkenyl groups in component (A), the cure of the resulting curable organopolysiloxane composition will be inadequate; at more than 5.0 moles silicon-bonded hydrogen in component (B) per 1 mole alkenyl groups in component (A), the cured product will have a reduced heat resistance.

Component (C) functions as an adhesion promoter for the composition of the present invention, and is an organosilicon compound that comprises of 1 to 20 mole% siloxane unit with the general formula

$R^4{}_eR^5{}_{(1-e)}SiO_{3/2}$,

20 to 80 mole% siloxane unit with the general formula

$R^4{}_fR^6{}_gR^6{}_hSiO_{2/2}$,

and 20 to 80 mole% siloxane unit with the general formula

$R^4{}_iR^5{}_jR^6{}_kSiO_{1/2}$.

$R^4$ is specifically exemplified by vinyl, allyl , butenyl, pentenyl, and hexenyl. $R^4$ is preferably the vinyl group. $R^5$ is selected from alkyl groups, alkoxyalkyl groups, and epoxy-containing organic groups. The alkyl groups encompassed by $R^5$ are methyl, ethyl, isopropyl, n-propyl, tert-butyl, n-butyl, pentyl, and hexyl. The alkoxyalkyl groups encompassed by $R^5$ are methoxyethyl, methoxypropyl, methoxyhexyl, ethoxypropyl, and ethoxyhexyl. The epoxy-containing organic groups encompassed by $R^5$ are 2,3-epoxypropyl, 3,4-epoxybutyl, 2-glycidoxyethyl, 3-glycidoxypropyl, 4-glycidoxybutyl, 2-(3,4-epoxycyclohexyl)ethyl, and 3-(3,4-epoxycyclohexyl)propyl. At least one $R^5$ in a component (C) molecule must be an epoxy-containing organic group to produce an excellent initial adherence in the cured product. $R^6$ is methoxy, ethoxy, propoxy, and butoxy. The methoxy group is preferred because the resulting curable organopolysiloxane composition has a particularly good self-bondability.

The subscripts in component (C) have the following values: $\underline{e}$ is zero or 1, $\underline{f}$ is zero or 1, $\underline{g}$ is an integer with a value of zero to 2, $\underline{h}$ is zero or 1, $\underline{f} + \underline{g} + \underline{h}$ is 2, $\underline{i}$ is zero or 1, $\underline{j}$ is an integer with a value of zero to 3, $\underline{k}$ is an integer with a value of zero to 2, and $\underline{i} + \underline{j} + \underline{k}$ is 3.

In addition, $R^4$ must be present in an amount to provide at least 2 mole% of the total silicon-bonded organic groups in component (C) and $R^6$ must be present in an amount to provide at least 5 mole% of the total silicon-bonded organic groups in component (C). Component (C) will bleed out from the cured product when $R^4$ is present in amounts of less than 2 mole% of the total silicon-bonded organic groups in component (C). The initial adherence immediately after curing will be impaired when $R^6$ is present in amounts of less than 5 mole% of the total silicon-bonded organic groups in component (C). A preferred class of organosilicon compounds (C) are those which have the following 20 to 30 mole percent. (MeO)-$MeViSiO_{1/2}$ units, 20 to 45 mole percent $MeViSiO_{2/2}$ units, 4 to 25 mole percent $(MeO)_2EpSiO_{1/2}$ units, 10 to 30 mole percent $(MeO)EpSiO_{2/2}$ units, and 10 to 20 mole percent $EpSiO_{3/2}$ units in which Me is methyl, MeO is methoxy, and Ep is 3-glycidoxypropyl.

Component (C) is added to the curable organopolysiloxane composition of the instant invention at 0.1 to 20 weight parts per 100 weight parts polyorganosiloxane of component (A). The self-bondability of the resulting curable organopolysiloxane composition is diminished at component (C) additions of less than 0.1 weight parts per 100 weight parts component (A). On the other hand, the storage stability of the resulting

curable organopolysiloxane composition is impaired at component (C) additions of more than 20 weight parts per 100 weight parts component (A).

The method for synthesizing component (C) is not specifically restricted. A specific example for the synthesis of component (C) consists of the equilibration polymerization of epoxy-containing organoalkoxysilane and alkenyl-containing organopolysiloxane in the presence of an alkali metal hydroxide such as potassium hydroxide, sodium hydroxide, or lithium hydroxide (refer to Japanese Patent Publication [Kokai] Hei 01-85224).

The organotitanium compoundf component (D), and the organosilicon compound, component (C), improve the initial adherence of the cured product as well as the durability of its adherence at high temperature and high humidity conditions. The organotitanium compound of component (D) can be tetraalkoxytitanium compounds such as tetra(n-butoxy)titanium, tetra(isopropoxy)titanium, tetrakis(2-ethylhexoxy)titanium, and tetra(stearoxy)titanium; titanium chelate compounds such as diisopropoxytitanium bis-(acetylacetonate), isopropoxytitanium(2-ethylhexanediolate), diisopropoxytitanium di(ethyl acetoacetate), and hydroxybis(lactate)titanium; or isopropyltriisostearoyl titanate, isopropyltris(dioctyl pyrophosphate) titanate, tetraisopropylbis(dioctyl phosphite) titanate, tetraoctylbis(ditridecyl phosphite) titanate, tetra-(2,2-diallyloxymethyl-1-butyl)bis(ditridecyl phosphite) titanate, bis(dioctyl pyrophosphate)oxyacetate titanate, bis(dioctyl pyrophosphate)ethylene titanate, isopropyltri-octanoyl titanate, and isopropyldimethacrylisostearoyl titanate. Tetra(n-butoxy) titanium is preferred because the resulting curable organopolysiloxane composition also has an excellent storage stability.

Component (D) is added to the curable organopolysiloxane composition of the instant invention at 0.01 to 2 weight parts per 100 weight parts of component (A). In the case of a component (D) addition is less than 0.01 weight parts per 100 weight parts component (A), the adherence of the cured product afforded by the cure of the curable organopolysiloxane composition has a diminished durability to high temperature and high humidity conditions. If component (D) addition is in excess of 3 weight parts per 100 weight parts of component (A), the cured product will have a diminished heat resistance.

The hydrosilylation-reaction catalyst of component (E) is a catalyst for the addition reaction between the alkenyl groups in component (A) and the silicon-bonded hydrogen in component (B). The hydrosilylation-reaction catalyst of component (E) can be platinum and platinum compounds, such as chloroplatinic acid, alcohol solutions of chloroplatinic acid, platinum/olefin complexes, platinum/vinylsiloxane complexes, platinum-on-silica, and platinum-on-active carbon; palladium compounds such as tetrakis(triphenylphosphine)-palladium; and rhodium compounds. Platinum compounds are preferred because the corresponding curable organopolysiloxane compositions exhibit an excellent curability and an excellent storage stability.

Componont (E) is added to the curable organopoly siloxane composition of the present invention in the catalytic quantities that are in general use. When component (E) is a platinum compound, component (F) is added in the range of 0.1 to 500 ppm as platinum metal atoms in component (E) based on component (A). The resulting curable organopolysiloxane composition will not cure adequately when less than 0.1 ppm platinum metal atoms from component (E) based on component (A) is used. When more than 500 ppm platinum metal atoms from component (E) is used, the cured product will have a diminished heat resistance.

The curable organopolysiloxane composition of the invention is prepared by mixing components (A) to (E) to homogeneity. In addition to components (A) to (E), the curable organopolysiloxane composition of the present invention may contain the following components insofar as the object of the present invention is not impaired: inorganic fillers such as fumed silica, calcined silica, wet-method silica, quartz powder, titanium oxide, fumed titanium oxide, calcium carbonate, iron oxide, zinc oxide, or aluminum hydroxide; thermally conductive fillers such as aluminum oxide, silicon nitride, boron nitride, or diamond powder; electrically conductive fillers such as copper powder, gold powder, silver powder, nickel powder, the powder of gold-coated copper, and conductive carbon blacks; pigments such as carbon black, red iron oxide, or titanium oxide; organic solvents such as toluene, xylene, hexane, heptane, methyl ethyl ketone, acetone, ethanol, or isopropyl alcohol; addition-reaction inhibitors such as 1,3,5,7-tetramethyl-1,3,5,7-tetravinylcyclotetrasiloxane, or 3-methyl-1-butyne-3-ol; and dyes.

The present invention will be explained in greater detail through working examples. The viscosity in the examples is the value measured at 25 °C. The following abbreviations are used in the tables: Me for methyl, Vi for vinyl, and Ep for 3-glycidoxypropyl. Parts are weight parts. The initial adherence of the cured product immediately after the cure of the curable organopolysiloxane composition and the durability of the adherence exposed to high temperature and high humidity conditions were evaluated as follows.

Initial adherence

A particular curable organopolysiloxane composition was applied on glass plate, gold plate (gold vapor-deposited on glass/epoxy resin), and polyimide resin. The curable organopolysiloxane composition was cured by standing for 1 hour in a hot air circulation oven at 150 °C. After cooling to room temperature, the adherence of the cured product was evaluated as follows.

+ + : strong adhesion by the cured product to the substrate
+ : delamination at the interface is observed in some areas despite the presence of strong adhesion by the cured product to the substrate
x : complete interfacial delamination of the cured product from the substrate

Adherence durability

A particular curable organopolysiloxane composition was applied on glass plate, gold plate (gold vapor-deposited on glass/epoxy resin), and polyimide resin. The curable organopolysiloxane composition was cured by standing for 1 hour in a hot air circulation oven at 150 °C. The specimen was then held for 24 hours in a 121 °C/100% RH ambient, and the durability of the adherence of the cured product was evaluated as follows.

+ + : strong adhesion by the cured product to the substrate
+: delamination at the interface is observed in some areas despite the presence of strong adhesion by the cured product to the substrate
x : complete interfacial delamination of the cured product from the substrate

REFERENCE EXAMPLE 1

100 parts tetramethyltetravinylcyclotetrasiloxane, 70 parts 3-glycidoxypropyltrimethoxysilane, and 0.14 part potassium hydroxide were placed in a four-neck flask equipped with stirrer, thermometer, and reflux condenser and heated with stirring. A polymerization reaction was run for 3 hours at 120 °C followed by neutralization with dimethyldichlorosilane. The low boilers were then removed by vacuum distillation at 110 °C/667 Pa. Analysis of the product by Fourier transform nuclear magnetic resonance analysis confirmed it to be an organosilicon compound with the structural formulas reported in Table 1.

TABLE 1

| STRUCTURAL FORMULA | MOLE% |
|---|---|
| $(MeO)MeViSiO_{1/2}$ | 28.5 |
| $MeViSiO_{2/2}$ | 41.6 |
| $(MeO)_2EpSiO_{1/2}$ | 4.3 |
| $(MeO)EpSiO_{2/2}$ | 14.9 |
| $EpSiO_{3/2}$ | 10.8 |

REFERENCE EXAMPLE 2

100 parts hydroxyl-terminated polymethylvinylsiloxane (number average molecular weight = 700), 140 parts 3-glycidoxypropyl-trimethoxysilane, and 0.14 part potassium hydroxide were placed in a four-neck flask equipped with stirrer, thermometer, and reflux condenser and heated with stirring. A reaction was run for 3 hours at 120 °C followed by neutralization with dimethyldichlorosilane. The low boilers were then removed by vacuum distillation at 110 °C/667 Pa. Analysis of the product by Fourier transform nuclear magnetic resonance analysis confirmed it to be an organosilicon compound with the structural formulas reported in Table 2.

TABLE 2

| STRUCTURAL FORMULA | MOLE% |
|---|---|
| $(MeO)MeViSiO_{1/2}$ | 21.7 |
| $MeViSiO_{2/2}$ | 21.4 |
| $(MeO)_2EpSiO_{1/2}$ | 12.3 |
| $(MeO)EpSiO_{2/2}$ | 26.8 |
| $EpSiO_{3/2}$ | 17.8 |

REFERENCE EXAMPLE 3

100 parts 1,3,5,7-tetramethyl-1,3,5,7-tetravinylcyclotetrasiloxane, 70 parts 3-methoxypropyltri-methoxysilane, and 0.14 part potassium hydroxide were placed in a four-neck flask equipped with stirrer, thermometer, and reflux condenser and heated with stirring. A reaction was run for 3 hours at 120 °C followed by neutralization with dimethyldichlorosilane. The low boilers were then removed by vacuum distillation at 110 °C/667 Pa. Analysis of the product by Fourier transform nuclear magnetic resonance analysis confirmed it to be an organosilicon compound with the structural formulas reported in Table 3.

TABLE 3

| STRUCTURAL FORMULA | MOLE% |
|---|---|
| $(MeO)MeViSiO_{1/2}$ | 28.6 |
| $MeViSiO_{2/2}$ | 41.5 |
| $(MeO)_2(MeOC_3H_6)SiO_{1/2}$ | 4.8 |
| $(Meo)(MeOC_3H_6)SiO_{2/2}$ | 14.3 |
| $MeOC_3H_6SiO_{3/2}$ | 10.9 |

EXAMPLE 1

The following were mixed to homogeneity to give curable organopolysiloxane composition (I) in accordance with the present invention: 100 parts dimethylvinylsiloxy-terminated polydimethylsiloxane (number average molecular weight = 11,000), 1.2 parts trimethylsiloxy-terminated polymethylhydrogensiloxane (number average molecular weight = 2,300), 1.5 parts of the organosilicon compound synthesized in Reference Example 1, 0.2 parts tetra(n-butoxy)titanium, 0.15 part of 2 weight% isopropanolic chloroplatinic acid solution, and 0.005 part 3-methyl-1-butyn-3-ol. The cured product (I) was evaluated for its initial adherence and for the durability of its adherence at high temperature and high humidity conditions. These results are reported in Table 4.

COMPARISON EXAMPLE 1

A curable organopolysiloxane composition was prepared as in Example 1, but in this case omitting the organosilicon compound synthesized in Reference Example 1. The cured product was evaluated as in Example 1. These results are reported in Table 4.

COMPARISON EXAMPLE 2

A curable organopolysiloxane composition was prepared as in Example 1, but in this case omitting the tetra(n-butoxy)titanium that was used in Example 1. The cured product was evaluated as in Example 1. These results are reported in Table 4.

COMPARISON EXAMPLE 3

A curable organopolysiloxane composition was prepared as in Example 1, but using the organosilicon compound synthesized in Reference Example 3 instead of the organosilicon compound of Reference Example 1. The cured product was evaluated as in Example 1. These results are reported in Table 4.

TABLE 4

| | PRESENT INVENTION EXAMPLE 1 | COMPARISON EXAMPLES | | |
|---|---|---|---|---|
| | | COMPARISON EXAMPLE 1 | COMPARISON EXAMPLE 2 | COMPARISON EXAMPLE 3 |
| INITIAL ADHERENCE | | | | |
| Glass Plate | + + | x | + + | + |
| Gold Plate | + + | x | + + | + |
| Polyimide Resin | + + | x | + + | + |
| ADHERENCE DURABILITY | | | | |
| Glass Plate | + + | x | + | + + |
| Gold Plate | + + | x | + | + + |
| Polyimide Resin | + + | x | + | + |

EXAMPLE 2

The following were mixed to homogeneity to give curable organopolysiloxane composition (II) in accordance with the instant invention: 100 parts dimethylvinylsiloxy-terminated polydimethylsiloxane (number average molecular weight = 11,000), 1.2 parts trimethylsiloxy-terminated polymethylhydrogensiloxane (number average molecular weight = 2,300), 1.5 parts of the organosilicon compound synthesized in Reference Example 2, 0.2 part tetra(isopropoxy)titanium, 0.15 part of 2 weight% isopropanolic chloroplatinic acid solution, and 0.005 part 3-methyl-1-butyn-3-ol. The cured product (II) was evaluated as in Example 1. These results are reported in Table 5.

COMPARISON EXAMPLE 4

A curable organopolysiloxane composition was prepared as in Example 2, but omitting the organosilicon compound Reference Example 2. The cured product was evaluated as in Example 1. These results are reported in Table 5.

COMPARISON EXAMPLE 5

A curable organopolysiloxane composition was prepared as in Example 2, but omitting the tetra(isopropoxy)titanium of Example 2. The cured product was evaluated as in Example 1. These results are reported in Table 5.

COMPARISON EXAMPLE 6

A curable organopolysiloxane composition was prepared as in Example 2, but in this case using the organosilicon compound synthesized in Reference Example 3. The cured product was evaluated as in Example 1. These results are reported in Table 5.

TABLE 5

| | PRESENT INVENTION EXAMPLE 2 | COMPARISON EXAMPLES | | |
|---|---|---|---|---|
| | | COMPARISON EXAMPLE 4 | COMPARISON EXAMPLE 5 | COMPARISON EXAMPLE |
| INITIAL ADHERENCE | | | | |
| Glass Plate | + + | x | + + | + |
| Gold Plate | + + | x | + + | + |
| Polyimide Resin | + + | x | + + | + |
| ADHERENCE DURABILITY | | | | |
| Glass Plate | + + | x | + | + + |
| Gold Plate | + + | x | + | + + |
| Polyimide Resin | + + | x | + | + |

EFFECTS OF THE INVENTION

Because the curable organopolysiloxane composition of the present invention comprises components (A) through (E) and in particular because it has the organosilicon compound comprising component (C) and the organotitanium compound comprising component (D), it characteristically forms a cured product that has an excellent initial adherence immediately after curing and whose adherence is very durable at high temperature and high humidity conditions.

**Claims**

**1.** A curable organopolysiloxane composition comprising

(A) 100 weight parts of a polyorganosiloxane that contains in each molecule at least 2 siloxane units with the following general formula

$R^1{}_aR^2{}_bSiO_{[4-(a+b)]/2}$

$R^1$ represents an alkenyl group, $R^2$ represents a substituted or unsubstituted monovalent hydrocarbon group excluding alkenyl groups, a is 1 or 2, b is an integer with a value of zero to 2, and a + b is an integer with a value of 1 to 3,

(B) polyorganohydrogensiloxane that contains in each molecule at least 2 siloxane units with the following general formula

$R^3{}_cH_dSiO_{[4-(c+d)]/2}$

$R^3$ represents a substituted or unsubstituted monovalent hydrocarbon group excluding alkenyl groups, c is an integer with a value of zero to 2, d is an integer with a value of 1 to 3, and c + d is an integer with a value of 1 to 3, in a quantity that provides 0.5 to 5.0 moles silicon-bonded hydrogen atoms in component (B) per 1 mole alkenyl groups in component (A),

(C) 0.1 to 20 weight parts of a organosilicon compound comprising

1 to 20 mole% siloxane unit with the general formula

$R^4{}_eR^5{}_{(1-e)}SiO_{3/2}$

20 to 80 mole% siloxane unit with the general formula

$R^4{}_fR^5{}_gR^6{}_hSiO_{2/2}$

and

20 to 80 mole% siloxane unit with the general formula

$R^4{}_iR^5{}_jR^6{}_kSiO_{1/2}$

$R^4$ represents an alkenyl group; $R^5$ is a group selected from alkyl groups, alkoxyalkyl groups, and epoxy-containing organic groups with the proviso that at least one of the preceding siloxane units in a molecule contains an epoxy-containing organic group as $R^6$; $R^6$ represents an alkoxy group having 1 to 4 carbon atoms; e is zero or 1; f is zero or 1; g is an integer with a value of zero to 2; h is zero or 1; f + g + h is 2; i is zero or 1; j is an integer with a value of zero to 3; k is an integer with a value of zero to 2;i + j + k is 3;

with the provisos that $R^4$ comprises at least 2 mole% of the total silicon-bonded organic groups in component (C) and $R^6$ comprises at least 5 mole% of the total silicon-bonded organic groups in component (C),

(D) 0.01 to 2 weight parts organotitanium compound, and

(E) a hydrosilylation-reaction catalyst in the amount of 0.1 to 500 parts of metal atom per one million parts of component (A).

**2.** The curable organopolysiloxane composition in accordance with claim 1 in which the polyorganosiloxane of (A) is a polymethylsiloxane, $R^1$ is vinyl, and $R^6$ is methoxy.

**3.** The curable organopolysiloxane composition in accordance with claim 1 in which the organotitanium compound (D) is tetra(n-butoxy)titanium and $R^4$ is 3-glycidoxypropyl.

**4.** The curable organopolysiloxane composition in accordance with claim 1 in which organosilicon compound of (C) has 20 to 30 mole percent $(MeO)MeViSiO_{1/2}$ units, 20 to 45 mole percent $MeViSiO_{2/2}$ units, 4 to 25 mole percent $(MeO)_2EpSiO_{1/2}$ units, 10 to 30 mole percent $(MeO)EpSiO_{2/2}$ units, and 10 to 20 mole percent $EpSiO_{3/2}$ units in which Me is methyl, MeO is methoxy, and Ep is 3-glycidoxypropyl.